# EUROPEAN PATENT SPECIFICATION

(11) **EP 1 566 063 B1**
(45) Date of publication and mention of the grant of the patent: **03.12.2008**
(21) Application number: 03810362.8
(22) Date of filing: 27.10.2003
(51) Int. Cl.: H04Q 7/20

(54) **A method of processing subscriber contract information WLAN**
Verfahren zum verarbeiten von Teilnehmer-Vertragsinformation, WLAN
Procédé de traitement d'informations relatives à un contrat d'abonné dans un réseau local sans fil

(30) Priority: 08.11.2002 CN 02148903
(43) Date of publication of application: 24.08.2005
(73) Proprietor: Huawei Technologies Co., Ltd., Longgang District, Shenzhen, Guangdong 518129 (CN)
(72) Inventor: ZHANG, Wenlin, Shenzhen, Guangdong 518129 (CN); LI, Zhiming, Shenzhen, Guangdong 518129 (CN)
(74) Representative: Mounteney, Simon James
(86) International application number: PCT/CN2003/000902
(87) International publication number: WO 2004/043090

(56) References cited:
- EP-A2- 0 917 320
- KR-A- 20010 090 038
- KR-A- 20020 071 505
- "Digital cellular telecommunications system (Phase 2+); Universal Mobile Telecommunications System (UMTS); IP Multimedia Subsystem (IMS); Stage 2 (3GPP TS 23.228 version 5.6.0 Release 5); ETSI TS 123 228" ETSI STANDARDS, EUROPEAN TELECOMMUNICATIONS STANDARDS INSTITUTE, SOPHIA-ANTIPO, FR, vol. 3-SA2, no. V560, September 2002 (2002-09), XP014007876 ISSN: 0000-0001
- "3rd Generation Partnership Project; Technical Specification Group Services and System Aspects; 3GPP system to Wireless Local Area Network (WLAN) Interworking; Functional and architectural definition (Release 6); 3GPP TR 23.934" ETSI STANDARDS, EUROPEAN TELECOMMUNICATIONS STANDARDS INSTITUTE, SOPHIA-ANTIPO, FR, no. V100, August 2002 (2002-08), XP014021958 ISSN: 0000-0001

## Description

### Field of the Invention

The present invention relates to processing of subscription information, in particular, to a method for deleting subscription information in a subscription information application unit of a Wireless Local Area Network (WLAN).

### Background of the Invention

As users demand higher and higher wireless access speed, WLANs have emerged to provide high-speed wireless data access in small areas. There are many different technologies used for WLANs, and a standard with wider application at present is IEEE 802.11b, which runs at 2.4GHz frequency band. Another technology at the same frequency band is Bluetooth. Other new technologies, such as IEEE 802.11a and ETSI BRAN Hiper1an2, adopt 5GHz frequency band.

Despite many different wireless access technologies, most WLANs are used to transfer Internet Protocol (IP) data packet. For a wireless IP network, the specific WLAN access technologies are usually transparent to upper IP layer and the basic concept is to achieve wireless access for user terminals by means of an Access Point (AP) and to construct an IP transmission network by network control and link of connection devices.

For wireless networks, there is always a PURGE mechanism between a Visitor Location Register (VLR) and a Home Location Register (HLR) in a Global System for Mobile communication (GSM), or between a Serving GPRS Support Node (SGSN) and a Home Location Register (HLR), so as to ensure that a notification will be sent to the HLR after the subscriber relevant information stored in the VLR or the SGSN has been deleted.

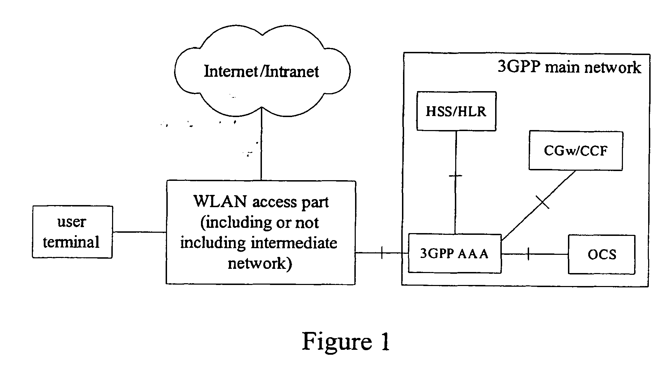

With the rising and development of WLANs, the inter-working between WLANs and various wireless mobile communication networks, such as GSM, Code Division Multiple Access (CDMA) system, Wideband Code Division Multiple Access (WCDMA) system, Time Division-Synchronous Code Division Multiple Access (TD-SCDMA) system and CDMA 2000 system, is becoming the focus of current research. According to the provisions of the Third Generation Partnership Project (3GPP) standardization organization, the simplified network architecture for inter-working between WLANs and 3GPP systems is shown in Figure 1. User terminals can access to the Internet and Intranet as well as to the core network of a 3GPP system via a WLAN access network. Obviously, as a wireless access technology for providing IP communications, WLANs are able to connect and interact with many other networks.

When a WLAN is connected with another network, authentication, authorization and accounting for the connection is usually controlled and handled by a corresponding server, and the subscription information is managed in a subscription information storage unit, e.g. a Home Subscriber Server (HSS)/HLR in a 3GPP system. When authentication, authorization and accounting is needed, the subscription information is obtained from the subscription information storage unit by a corresponding application server, such as an Authentication, Authorization and Accounting (AAA) server, for storage until the user terminates the service. When the subscription information is changed in the subscription information storage unit, this subscription information storage unit will notify the corresponding application server to update the data in time. When the user terminates the service and the subscription information is not needed any longer, the subscription information application server can delete the relevant data of the user. In implementation, it is possible to delete the relevant data of the user immediately after he is offline or to keep the data for a period of time before it is deleted so that it can be used when the user logs in again.

When the subscription information is deleted in the corresponding application server, the subscription information storage unit should be notified at the meantime to avoid the storage unit from sending unnecessary interactive signaling. A mechanism for this purpose has been proposed in ETSI Standard TS 123228 Version 5.6.0, 09.2002 , however, signaling is sent regardless of whether, the subscription information storage unit knows whether subscription information has been deleted, and will still send unnecessary commands to the subscription information application server, consequently leading to waste of system resources. Furthermore, when this kind of signaling is of a great amount, the system's normal running will be affected.

### Summary of the Invention

In view of this, the present invention provides a method for processing subscription information in a WLAN, enabling the subscription information storage unit to acquire in time the information that the subscription information has been deleted so as to avoid sending redundant messages and improve the working efficiency of the system.

For the above purpose, the following solution is proposed in the present invention.

A method for processing subscription information in a WLAN, applicable to a WLAN interactive network mainly consisting of WLAN user terminals, a WLAN access unit, a subscription information application unit and a subscription information storage unit, the method may include:
when the subscription information of a user terminal stored in the subscription information application unit is to be deleted, the subscription information application unit determining whether the deletion is instructed by the subscription information storage unit, if the deletion is instructed by the subscription information storage unit, the subscription information is deleted according to the instruction and the procedure ended;
if the deletion is not instructed by the subscription information storage unit, a notification is sent to the subscription information storage unit after deleting the subscription information;
after receiving the notification, the subscription information storage unit recordes the notification.

A subscription information application unit for processing subscription information in a Wireless Local Area Network (WLAN) includes:
a first unit, adapted to determine whether the deletion is instructed by the subscription information storage unit, if subscription information of a user terminal stored in the subscription information application unit is to be deleted; and
a second unit, adapted to delete the subscription information according to the instruction and ending the procedure if the deletion is instructed by the subscription information storage unit, or send a notification to a subscription information storage unit after deleting the subscription information if the deletion is not instructed by the subscription information storage unit.

A system for processing subscription information in a Wireless Local Area Network (WLAN) includes:
a subscription information storage unit, adapted to receive the notification from the subscription information application unit according to claim 9, and record the notification.

Therefore, with the method for processing the subscription information in a WLAN proposed in the present invention, a message will be sent in time to notify the subscription information storage unit after the subscription information is deleted by the subscription information application unit, so that the subscription information storage unit will no longer send redundant updating or deleting messages. Therefore, unnecessary consuming of system resources is avoided; the working efficiency of the system as well as the effectiveness of message transmission is improved; and more convenient and diversified services for WLAN users can be provided.

### Brief Description of the Drawings

Figure 1 is a schematic diagram illustrating the simplified network architecture for the inter-working between a WLAN and a 3GPP system.
Figure 2 is a schematic diagram illustrating the network architecture for the subscription information management in a WLAN system.
Figure 3 is a signaling procedure of the method according to the present invention.
Figure 4 is a schematic diagram illustrating the network architecture according to an embodiment of the present invention.
Figure 5 is a signaling flowchart of the method according to an embodiment of the present invention.

### Detailed Description of the Invention

The present invention will be further described in detail hereinafter with reference to the accompanying drawings and a specific embodiment.

In view of the prior art of WLAN, an interactive method between a subscription information application unit and a subscription information storage unit in a WLAN system is proposed in the present invention. In this method, the subscription information application unit will send a notification to the subscription information storage unit immediately after the subscription information in the subscription information application unit is deleted.

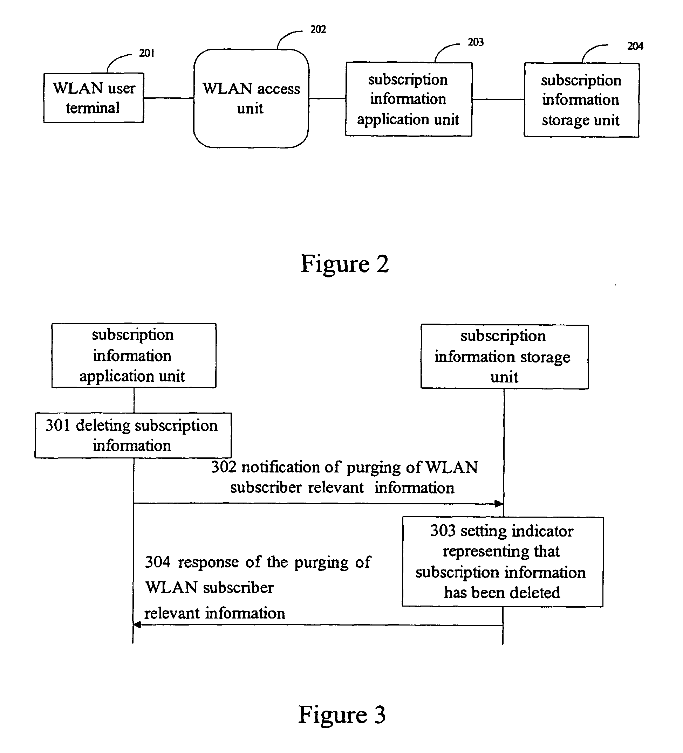

As shown in Figure 2 which is a schematic diagram illustrating the network architecture for implementing subscription information management in a WLAN system, the WLAN access unit 202 is responsible for user terminals' access and routing management, making the user terminals be able to communicate with one another through IP protocol and to connect and communicate with other IP networks. Usually, the WLAN access unit mainly comprises an Access Point (AP) and an Access Controller (AC), and may also comprise a router for network connection and a relevant server for network control, etc. The subscription information application unit 203 is mainly responsible for subscription information management, making a decision based on subscription information and controls network access and the provisioning of services when a user is accessing or using a certain service. The AAA server is a specific example of the subscription information application unit. The subscription information storage unit 204 is used to store subscription information of all users.

In general, after the WLAN user terminal 201 has accessed to the WLAN for the first time via the WLAN access unit 202, the subscription information is stored in both the subscription information application unit 203 and the subscription information storage unit 204. When this WLAN user terminal needs this subscription information for accessing networks again or accessing relevant services, the subscription information application unit 203 will search the information in itself. If the subscription information is not found, the subscription information application unit 203 will obtain the information from the subscription information storage unit 204, such as the HSS/HLR, and store the obtained information. When the subscription information is deleted by and from the subscription information application unit 203, if it is not deleted as instructed by the subscription information storage unit 204, the subscription information application unit 203 will send a message to the subscription information storage unit 204, notifying the storage unit 204 that relevant information of a certain user terminal has been deleted.

The procedure by which the subscription information application unit notifies the subscription information storage unit of the deletion of the subscription information is shown in Figure 3, comprising the steps as follows.

In Steps 301∼302, when subscription information of a certain user terminal is to be deleted in the subscription information application unit, the subscription information application unit determines whether the deletion is instructed by the subscription information storage unit; if so, it will delete this subscription information according to the instruction of the storage unit and end this procedure; otherwise, it will send a notification to the subscription information storage unit right after it deletes the data, notifying the subscription information storage unit to purge the WLAN subscriber relevant information.

In Step 303, the subscription information storage unit records the notified information after receiving the notification. In specific applications, said recording of the notification may comprise setting a record or an indicator to indicate that the WLAN subscription information has been deleted in the corresponding subscription information application unit so that it is convenient for the user to re-use the information when he logs in again.

The subscription information storage unit, after implementing a processing for the deleted subscription information, may further implement step 304 in which the subscription information storage unit sends to the application unit a response message for the purging of the WLAN subscriber relevant information, indicating that the information has been correctly recorded.

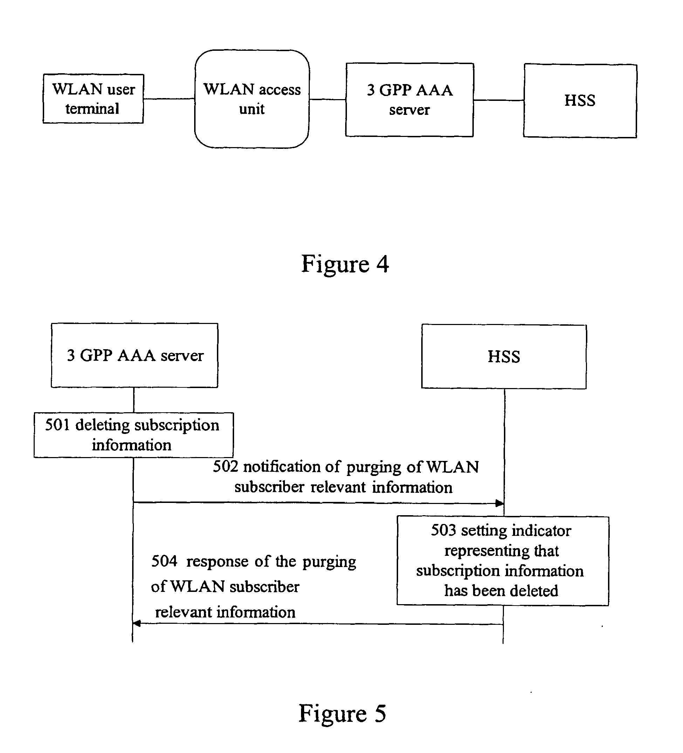

Figure 4 and Figure 5 respectively illustrate the network architecture and the signaling flowchart according to a specific embodiment of the present invention. As shown in Figure 4, this embodiment is implemented in the inter-working between a 3GPP network and a WLAN. In this embodiment, the subscription information application unit is a 3GPP AAA Server in charge of authentication, authorization and accounting for users; the subscription information storage unit is an HSS in charge of storing the subscription information. As a result, this 3GPP-WLAN interactive service network comprises WLAN user terminals, a WLAN wireless access unit, a 3GPP AAA Server and an HSS, and is connected to the packet field in the 3GPP network as well as to the Internet.

When a user terminal logs in the 3GPP-WLAN interactive service network and receives a service, the subscription information of the user is downloaded to the 3GPP AAA Server from the HSS. The downloaded data will be deleted sometime later, for example, when the user logs out from the system and exits the WLAN, when the user has exited the WLAN for some time, when the system needs to delete the data due to reasons in operation and maintenance, or when the administrator of the 3GPP AAA Server has to delete the data of a user with reasons such as in management. In all these cases, the 3GPP AAA Server should notify the HSS after the data is deleted.

Based on the network architecture as shown in Figure 4, the process by which the 3GPP AAA Server notifies the HSS of the deletion of the subscription information in this exemplary embodiment is shown in Figure 5, comprising the steps as follows.

In Steps 501∼502, when subscription information of a certain user terminal is to be deleted in the 3GPP AAA Server, the 3GPP AAA Server determines whether the deletion is instructed by the HSS; if so, it will delete this subscription information according to the instruction of the HSS, return a response message to the HSS according to specific requirements of the implementation, and end this procedure; otherwise, it will send a notification to the HSS right after it deletes the data, notifying the HSS to purge the WLAN subscriber relevant information.

In Step 503, the HSS records the notified information after receiving the notification. In specific applications, said recording the notification may comprise setting a record or an indicator as required to indicate that the WLAN subscription information has been deleted in the corresponding subscription information application unit so that it is convenient for the user to re-use the information when he logs in again.

The HSS, after implementing a processing for the deleted subscription information, may further implement step 504 in which the HSS sends to the 3GPP AAA Server a response message for the purging of the WLAN subscriber relevant information, indicating that the information about purge has been correctly recorded.

In the above process, transmission of the notification and response between the 3GPP AAA Server and the HSS about the purging of the WLAN subscriber relevant information is implemented by means of existing protocols, such as Mobile Application Part (MAP) protocol, Remote Authentication Dial-In User Service (RADIUS) protocol, or Diameter protocol, etc.

The above description is just a preferable embodiment of the present invention and not to be construed as limits to the protection scope of the present invention.

## Claims

1. A method for processing subscription information in a Wireless Local Area Network, WLAN, applicable to a WLAN interactive network mainly consisting of WLAN user terminals, a WLAN access unit, a subscription information application unit and a subscription information storage unit, **characterized in that:**
when subscription information of a user terminal stored in the subscription information application unit is to be deleted, the subscription information application unit determines whether the deletion is instructed by the subscription information storage unit;
if the deletion is instructed by the subscription information storage unit, the subscription information is deleted according to the instruction and the procedure ended;
if the deletion is not instructed by the subscription information storage unit, a notification is sent to the subscription information storage unit after deleting the subscription information; and
after receiving the notification, the subscription information storage unit records the notification.

2. The method according to claim 1, further comprises: the subscription information storage unit returning an update response message to the subscription information application unit.

3. The method according to claim 1, wherein said subscription information application unit is an Authentication, Authorization and Accounting (AAA) server.

4. The method according to claim 3, wherein said AAA server is a 3GPP AAA Server.

5. The method according to claim 1, wherein said subscription information storage unit is a Home Subscriber Server (HSS) or a Home Location Register (HLR).

6. The method according to claim 1, wherein the subscription information storage unit recording the notification comprises:
setting a record or an indicator to indicate that the subscription information application unit has deleted the subscription information.

7. The method according to claim 1, wherein deleting the subscription information comprises:
deleting the subscription information immediately after the user terminal is disconnected from the WLAN network.

8. The method according to claim 1, wherein deleting the subscription information comprises:
deleting the subscription information after the subscription information of the user terminal has been kept in the application unit for a period of time since the user terminal was disconnected from the WLAN network.

9. A subscription information application unit for processing subscription information in a Wireless Local Area Network (WLAN), **characterized by** comprising:
a first unit, adapted to determine whether the deletion is instructed by the subscription information storage unit if subscription information of a user terminal stored in the subscription information application unit is to be deleted; and
a second unit, adapted to delete the subscription information according to the instruction and ending the procedure if the deletion is instructed by the subscription information storage unit, or send a notification to a subscription information storage unit after deleting the subscription information if the deletion is not instructed by the subscription information storage unit.

10. A system for processing subscription information in a Wireless Local Area Network (WLAN), **characterized by**:
a subscription information storage unit, adapted to receive the notification from the subscription information application unit according to claim 9, and record the notification.

11. The system according to claim 10, wherein the subscription information storage unit comprises a unit configured to return an update response message to the subscription information application unit.

## Patentansprüche

1. Verfahren zum Verarbeiten von Teilnehmerinformationen in einem drahtlosen Ortsnetz, WLAN, anwendbar auf ein interaktives WLAN-Netz, das hauptsächlich aus WLAN-Benutzerendgeräten, einer WLAN-Zugangseinheit, einer Teilnehmerinformationen-Anwendungseinheit und einer Teilnehmerinformationen-Speichereinheit besteht, **dadurch gekennzeichnet, dass:**
wenn Teilnehmerinformationen eines Benutzerendgeräts, die in der Teilnehmerinformationen-Anwendungseinheit gespeichert sind, zu löschen sind, die Teilnehmerinformationen-Anwendungseinheit entscheidet, ob die Löschung von der Teilnehmerinformationen-Speichereinheit angewiesen ist;
wenn die Löschung von der Teilnehmerinformationen-Speichereinheit angewiesen ist, die Teilnehmerinformationen gemäß der Anweisung gelöscht werden und die Prozedur beendet wird;
wenn die Löschung nicht von der Teilnehmerinformationen-Speichereinheit angewiesen ist, eine Benachrichtigung an die Teilnehmerinformationen-Speichereinheit gesandt wird, nachdem die Teilnehmerinformationen gelöscht wurden; und
die Teilnehmerinformationen-Speichereinheit nach Empfang der Benachrichtigung die Benachrichtigung aufzeichnet.

2. Verfahren nach Anspruch 1, weiter umfassend: die Teilnehmerinformationen-Speichereinheit sendet eine Aktualisierungs-Antwortnachricht zurück an die Teilnehmerinformationen-Anwendungseinheit.

3. Verfahren nach Anspruch 1, wobei die Teilnehmerinformationen-Anwendungseinheit ein Authentifizierungs-, Berechtigungs- und Buchführungs-(AAA)-Server ist.

4. Verfahren nach Anspruch 3, wobei der AAA-Server ein 3GPP-AAA-Server ist.

5. Verfahren nach Anspruch 1, wobei die Teilnehmerinformationen-Speichereinheit ein Heimatteilnehmer-Server (HSS) oder eine Heimatdatei (HLR) ist.

6. Verfahren nach Anspruch 1, wobei die Aufzeichnung der Benachrichtigung durch die Teilnehmerinformationen-Speichereinheit umfasst:
Setzen einer Aufzeichnung oder einer Anzeige, um anzuzeigen, dass die Teilnehmerinformationen-Anwendungseinheit die Teilnehmerinformationen gelöscht hat.

7. Verfahren nach Anspruch 1, wobei Löschen der Teilnehmerinformationen umfasst:
Löschen der Teilnehmerinformationen, unmittelbar nachdem das Benutzerendgerät von dem WLAN-Netz abgetrennt ist.

8. Verfahren nach Anspruch 1, wobei Löschen der Teilnehmerinformationen umfasst:
Löschen der Teilnehmerinformationen, nachdem die Teilnehmerinformationen des Benutzerendgeräts in der Anwendungseinheit für eine Zeitperiode, nachdem das Benutzerendgerät von dem WLAN-Netz abgetrennt wurde, erhalten wurden.

9. Teilnehmerinformationen-Anwendungseinheit zum Verarbeiten von Teilnehmerinformationen in einem drahtlosen Ortsnetz (WLAN), **gekennzeichnet durch** Umfassen:
einer ersten Einheit, die angepasst ist, um zu bestimmen, ob die Löschung **durch** die Teilnehmerinformationen-Speichereinheit angewiesen ist, wenn Teilnehmerinformationen eines Benutzerendgeräts, die in der Teilnehmerinformationen-Anwendungseinheit gespeichert sind, zu löschen sind; und
einer zweiten Einheit, die angepasst ist, um die Teilnehmerinformationen gemäß der Anweisung zu löschen und die Prozedur zu beenden, wenn die Löschung von der Teilnehmerinformationen-Speichereinheit angewiesen ist, oder nach dem Löschen der Teilnehmerinformationen eine Benachrichtigung an eine Teilnehmerinformationen-Speichereinheit zu senden, wenn die Löschung nicht von der Teilnehmerinformationen-Speichereinheit angewiesen ist.

10. System zum Verarbeiten von Teilnehmerinformationen in einem drahtlosen Ortsnetz (WLAN), **gekennzeichnet durch**:
eine Teilnehmerinformationen-Speichereinheit, die angepasst ist, um die Benachrichtigung von der Teilnehmerinformationen-Anwendungseinheit nach Anspruch 9 zu empfangen und die Benachrichtigung aufzuzeichnen.

11. System nach Anspruch 10, wobei die Teilnehmerinformationen-Speichereinheit eine Einheit umfasst, die konfiguriert ist, um eine Aktualisierungs-Antwortnachricht an die Teilnehmerinformationen-Anwendungseinheit zurückzusenden.

## Revendications

1. Procédé pour traiter une information d'abonnement dans un Réseau Local Sans Fil, WLAN, pouvant être appliqué à un réseau interactif WLAN essentiellement constitué de terminaux utilisateurs WLAN, d'une unité d'accès WLAN, d'une unité d'application d'information d'abonnement et d'une unité de stockage d'information d'abonnement, **caractérisé en ce que:**
lorsqu'une information d'abonnement d'un terminal utilisateur qui est stockée dans l'unité d'application d'information d'abonnement doit être supprimée, l'unité d'application d'information d'abonnement détermine si la suppression est demandée ou non par l'unité de stockage d'information d'abonnement;
si la suppression est demandée par l'unité de stockage d'information d'abonnement, l'information d'abonnement est supprimée conformément à l'instruction et la procédure est terminée;
si la suppression n'est pas demandée par l'unité de stockage d'information d'abonnement, une notification est envoyée à l'unité de stockage d'information d'abonnement après suppression de l'information d'abonnement; et
après réception de la notification, l'unité de stockage d'information d'abonnement enregistre la notification.

2. Procédé selon la revendication 1, comprenant en outre le fait que l'unité de stockage d'information d'abonnement retourne un message de réponse de mise à jour à l'unité d'application d'information d'abonnement.

3. Procédé selon la revendication 1, dans lequel ladite unité d'application d'information d'abonnement est un serveur d'Authentification, Autorisation et Comptabilisation (AAA).

4. Procédé selon la revendication 3, dans lequel ledit serveur AAA est un serveur 3GPP AAA.

5. Procédé selon la revendication 1, dans lequel ladite unité de stockage d'information d'abonnement est un Serveur d'Abonné Domestique (HSS) ou un Registre de Localisation Domestique (HLR).

6. Procédé selon la revendication 1, dans lequel le fait que l'unité de stockage d'information d'abonnement enregistre la notification comprend:
l'établissement d'un enregistrement ou d'un indicateur pour indiquer que l'unité d'application d'information d'abonnement a supprimé l'information d'abonnement.

7. Procédé selon la revendication 1, dans lequel la suppression de l'information d'abonnement comprend:
la suppression de l'information d'abonnement immédiatement après que le terminal utilisateur a été déconnecté du réseau WLAN.

8. Procédé selon la revendication 1, dans lequel la suppression de l'information d'abonnement comprend:
la suppression de l'information d'abonnement après que l'information d'abonnement du terminal utilisateur a été maintenue dans l'unité d'application pendant une période temporelle depuis que le terminal utilisateur a été déconnecté du réseau WLAN.

9. Unité d'application d'information d'abonnement pour traiter une information d'abonnement dans un Réseau Local Sans Fil (WLAN), **caractérisée en ce qu'**elle comprend:
une première unité, adaptée pour déterminer si la suppression est demandée par l'unité de stockage d'information d'abonnement si une information d'abonnement d'un terminal utilisateur stockée dans l'unité d'application d'information d'abonnement doit être supprimée; et
une seconde unité, adaptée pour supprimer l'information d'abonnement conformément à l'instruction et qui termine la procédure si la suppression est demandée par l'unité de stockage d'information d'abonnement, ou pour envoyer une notification à une unité de stockage d'information d'abonnement après suppression de l'information d'abonnement si la suppression n'est pas demandée par l'unité de stockage d'information d'abonnement.

10. Système pour traiter une information d'abonnement dans un Réseau Local Sans Fil (WLAN), **caractérisé par**:
une unité de stockage d'information d'abonnement, adaptée pour recevoir la notification en provenance de l'unité d'application d'information d'abonnement conformément à la revendication 9, et pour enregistrer la notification.

11. Système selon la revendication 10, dans lequel l'unité de stockage d'information d'abonnement comprend une unité configurée pour retourner un message de réponse de mise à jour à l'unité d'application d'information d'abonnement.
